**Europäisches Patentamt**

**European Patent Office**

**Office européen des brevets**

(19)

(11) Publication number:

**0 015 330**
**A1**

## (12) EUROPEAN PATENT APPLICATION

(21) Application number: 79300294.0

(22) Date of filing: 26.02.79

(51) Int. Cl.³: **H 02 J 3/14, G 05 D 23/19**

(43) Date of publication of application: **17.09.80**
**Bulletin 80/19**

(84) Designated Contracting States: **BE CH DE FR GB NL**

(71) Applicant: **Ormsby, William Joseph, Jr., 1010, The Equitabe Building, Atlanta, Georgia 30303 (US)**

(72) Inventor: **Briscoe, Harry Hugh, Route 10 Vurnett Ferry Road, Rome, Georgia 30161 (US)**
Inventor: **Pillsbury, John Leach, 106 East Valley Road, Rome, Georgia 30161 (US)**

(74) Representative: **Weston, Walter et al, PHILLIPS & LEIGH 7 Staple Inn Holborn, London WC1V 7QF (GB)**

(54) **Apparatus and method for controlling electrical power demand.**

(57) A power demand limiting circuit is disclosed comprising air temperature control apparatus coupled with a municipal source of electric current through a thermo-responsive switch, through a meter having means for measuring maximum power demand for any period in a succession of periods of preselected duration, and through a timer programmed to cycle a timer switch at least once during each of the periods, whereby the air temperature control apparatus is rendered incapable of demanding power continuously throughout any of the metered periods.

EP 0 015 330 A1

- 1 -

## Apparatus and method for controlling electrical power demand

The invention relates to apparatus and a method for
controlling connection of an electrical power consumer's
circuit to a power supply source so that metered charging
for power supply, based not only on consumption but on
available peak demand periods irrespective of actual
consumption, can be limited.

Consumers of electrical power today are often charged by
electrical utilities for both total power consumption
during a billing period as well as for peak demand.  This
charge for peak demand is made irrespective of actual
consumption made by the consumer during any specific period.
The justification for this charge rests in the necessity
of the utility having to have the resources available to
provide power during peak demand periods.  In other words,
it compensates the utility company for having to have the
capacity available to service their customers during brief
peak demand periods which capacity may remain idle during
the remaining periods of each day and month.

Though billing periods of power companies normally cover a substantially long period of time such as a month, peak demand is calculated on a relatively short period of time such as quarter or half hour basis. Accordingly, utility companies meter both the total power supplied to their customers during each billing period as well as the maximum power delivered during any brief period in a succession of periods that cumulatively form the billing period. The maximum demand recorded during any of these brief periods in any one month is then imputed into a billing formula, exemplary of which is:

$$\text{Billing Charge} = \left[ KW\text{-}T_1 \right] \left[ \begin{array}{c} \text{Rate} \\ \text{charge} \end{array} \right] + \left[ \max \int_0^{T_2} KW \right] \left[ \begin{array}{c} \text{Demand} \\ \text{charge} \end{array} \right]$$

where $T_2$ is the aforementioned relative brief period of time such as a quarter hour or half hour and $T_1$ is the relative long billing period such as a month.

Typically, the electrical load that imposes the greatest demand for electricity for the majority of utility company customers is their temperature control systems, be it an air conditioning or electrical heating unit. Thus, on hot summer days, air conditioners usually account for peak demand of customers whereas in winter their heaters account for peak demand. These temperature control units are themselves ordinarily controlled by thermostats which cyclically couple the system with line voltage dependent upon sensed temperatures at which they are set to respond.

Their control function therefore is eventually divorced
from the just described method or formula by which their
consumption cost is calculated.

Accordingly, it is the general object of the present
invention to provide means for limiting peak power demand.

More specifically, it is an object of the present invention
to provide an electrical circuit for limiting peak power
demand of air temperature control systems such as air
conditioning and electrical heating systems.

Another object of the invention is to provide a power demand
limiting circuit of the type described which is easily
incorporated into preconstructed circuits supplying power
to air temperature control systems.

Yet another object of the invention is to provide a power
demand limiting circuit of the type described which may be
selectively activated and deactivated with facility.

In one form of the invention a power demand limiting circuit
is provided comprising air temperature control apparatus
coupled with a municipal source of electric current through
a thermo-responsive switch, through a meter having means for
measuring maximum power demand for any period in a
succession of periods of preselected duration, and through
a timer programmed to cycle a timer switch at least once
during each of the periods whereby the air temperature
control apparatus is rendered incapable of demanding power
continuously throughout any of the metered periods.

In another form of the invention a power demand limiting circuit is provided for limiting peak power demand of an air temperature control system adapted to be coupled with a municipal power source through metering means that meters the maximum power demand during any period in a succession of periods of the same duration. The power demand limiting circuit comprises circuit means for coupling the air temperature control system with the municipal power supply serially through a pair of switches. One of the switches comprises a thermostat responsive to the temperature of air controlled by the air temperature control system while the other switch comprises a timer programmed to cycle a timer switch on and off at least once during each period in the succession of periods.

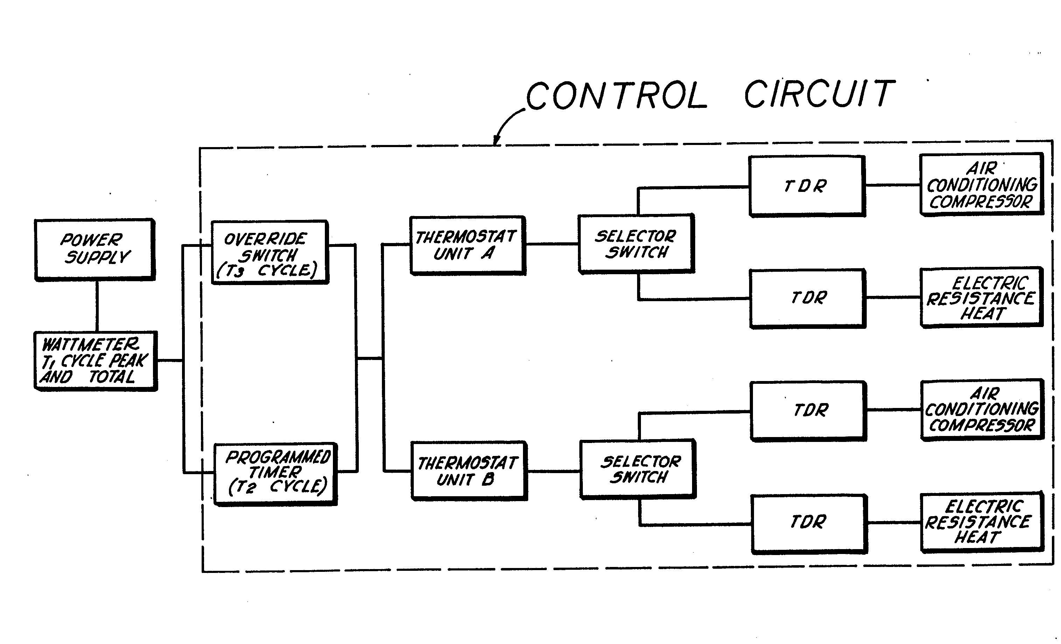

A preferred embodiment of the invention will be described with reference, by way of example, to the accompanying drawing which is a block diagram of a power demand limiting circuit embodying principles of the present invention in a preferred form.

Referring now in more detail to the drawing, a power demand limiting circuit is shown in block diagram form for limiting power to an air temperature control system of a building having two spacial areas independently serviced by two air conditioning units and two electrical resistance heating units. Power is supplied to these units from a municipal power source through a meter. The meter measures both total power consumption in kilowatt-hours for billing periods of duration $T_1$ as well as maximum power demand measured during the succession of time periods $T_2$ that form $T_1$.

With continued reference to the drawing the air conditioner
compressors and the electrical resistance heating elements
are both coupled to a municipal power supply by power
circuits through time delay relays that prevent all elements
in the compressors and heaters from being simultaneously
energized and thereby creating substantial surge currents.
A selector switch is provided for each spacial unit A and
B whereby air conditioning may be selected in summer by the
customer and heating in the winter.   Thermostats are also
provided independently for both units A and B.   A programmed
timer is also provided in the power circuit in series with
the thermostats which timer is programmed to make a complete
switching cycle in each period $T_2$ for which peak power
demand is metered.   An override switch is further provided
in parallel with the programmed timer to de-energize the
timer by short-circuiting it upon switch closure.   From the
timer the power circuit extends to the municipal power
supply through the previously described meter that measures
total power consumption during the billing period $T_1$ plus
peak demand during the succession of $T_2$ periods.

In operation, the timer is preferably programmed to make but
one complete cycle during each successive period for which
the meter measures maximum power consumption.   For example,
if the local utility measures peak power demand every thirty
minutes the timer may be programmed to cycle the timer
switch on or closed for, say, twenty minutes followed by an
open or de-energized period of ten minutes.   In this manner
the customer is assured that his air temperature control
systems will never be energized for more than two-thirds of
any demand period $T_2$ and thereby be assured that peak demand never surpasses two-thirds maximum. Therefore, even on a hot summer day when the thermostats may energize the air conditioning compressors almost continuously, the programmed timer prevents the compressors from being energized more than two-thirds of any one demand period time $T_2$. Upon the arrival of autumn and cooler days the customer may close the override switch and thereby de-activate the power demand limiting feature. Thus, typically the override switch is cycled seasonally, or every three months for a $T_3$ cycle. In the override mode the air conditioning compressors or electrical heating units are controlled just by the thermostats, selector switches and time delay relays. During this time moderate ambient temperatures themselves normally prevent any continuous demand for air temperature control from arising and thus maximum peak demand from also arising.

It should be understood that the just described embodiment merely illustrates the principle of the invention in a preferred form. Modifications, additions and deletions may, of course, be made thereto without departing from the spirit and scope of the invention as set forth in the following claims.

Claims:

1.  A consumer's electrical circuit having an electrical load coupled with a source of electric current through meter means for metering power consumption during a time period of relatively long duration and for metering maximum power demand during any time period in a succession of periods of relatively short duration occurring during the time period of relatively long duration, characterised thereby that means are provided for allowing the consumer to control his billing rate insofar as determined by maximum power.demand during said periods of short duration, comprising programmable timer means for interrupting the coupling of the electrical load with the source of electric current for a selected time at least once during each of said demand periods of relatively short duration.

2.  A power demand limiting circuit for allowing a consumer to control his billing rate by limiting peak power demand by an air temperature control system comprising, in combination, means for connection to a source of electric .current;  means for metering maximum power demand during any single demand period in a succession of demand periods of the same preselected duration and which cumulatively constitute a billing period, said metering means coupling said source of electric current with said air temperature control system;  and circuit means for coupling said air temperature control system with said source of electric current serially through a pair of switches with one switch means being a thermostat responsive to the temperature of air controlled by said air temperature control system and with the other switch means being a timer programmed to cycle on and off at least once during each period in said succession of demand periods whereby a consumer may control his billing rate by allowing said control system to consume power for a portion only of each period.

3.   A power demand limiting circuit in accordance with Claim 2 characterised thereby that said metering means further includes means for measuring total power consumption during said succession of periods.

4.   A power demand limiting circuit in accordance with Claim 2, said air temperature control system comprising an air conditioner compressor, characterised thereby that said air temperature control system further comprises an electrical resistance heating element, and said power demand limiting circuit further comprises selector switch means for coupling said air conditioner compressor and said electrical resistance heating element alternatively with said municipal source of electric current.

5.   A power demand limiting circuit for allowing a consumer to control his billing rate by limiting peak power demand for an electrical system coupled with a municipal power supply and including means for metering maximum power demand during any demand period in a succession of demand periods of preselected duration which cumulatively form a billing period characterised thereby that means are provided for cycling said system on and off for a selected period of time at least once during each demand period in said succession of demand periods.

6. A peak power demand limiting circuit for limiting power demand from an electrical system coupled with a municipal power supply which includes means for measuring power consumption over a complete billing period and means for measuring power consumed during each of a succession of equal, brief time periods which cumulatively form the billing period, said electrical system including demand switch means which may demand power throughout the entirety of any and each given one of said brief time periods whereby the electrical system could consume a maximum amount of power during each said given one of the brief time periods, characterised thereby that timer means are provided for preventing power consumption by said electrical system for a significant fraction of each said given one of the brief time periods whereby the amount of power which may be consumed by the electrical system during each said given one of the brief time periods is significantly less than said maximum amount.

7. In an electrical distribution system servicing a plurality of customers and including first metering means for determining the total electrical power consumption of each customer over a billing period such as a month and second metering means for determining the power consumed by each customer over each of a plurality of successive time periods such as a half hour which cumulatively cover said billing period, whereby said customer may be billed at a rate in accord with the measurement of said second metering means, at least one of said customers having an electrical load which is an air temperature control system provided with an electrical supply line connected with said distribution system and a thermostatically controlled switch for connecting said electrical load to said supply line in response to air temperature control demand, the improvement which comprises: programmable timer means in said supply line in series with said thermostatically controlled switch for allowing such switch to supply electrical power to said load for a fraction only of each of said time periods, whereby said one customer may control said rate at which he is billed.

8. A circuit in accordance with any foregoing claim, characterised thereby that override switch means are provided.

9. A method of allowing a consumer to control his billing rate by limiting peak power demand of an air temperature control system coupled with a municipal power supply through a thermostat switch responsive to the temperature of air controlled by said system, comprising the steps of metering maximum power demand during any demand period in a succession of demand periods of preselected duration and cycling said control system on and off at least once during each demand period in said succession of demand periods whereby said control system may consume power for a portion only of each said demand period.

10. A method of allowing a consumer to control his billing rate by regulating peak electrical power demand of an air temperature control system coupled through a thermo-responsive switch with a municipal power supply, comprising the step of connecting between said control system and said power supply a meter having means for measuring maximum power demand during any demand period in a succession of periods of preselected duration which cumulatively constitute a billing period during which the customer is billed at a rate dependent upon the power consumed during individual demand periods, and a timer programmed to cycle said control system on and off at least once during each of said periods of preselected duration, whereby said air temperature control system is capable of demanding power for a portion only of each demand period in the succession of periods correspondingly to reduce the customer's billing rate.

# CONTROL CIRCUIT

```
POWER
SUPPLY

WATTMETER
T₁ CYCLE PEAK
AND TOTAL

OVERRIDE
SWITCH
(T₃ CYCLE)

PROGRAMMED
TIMER
(T₂ CYCLE)

THERMOSTAT
UNIT A

THERMOSTAT
UNIT B

SELECTOR
SWITCH

SELECTOR
SWITCH

TDR          AIR
             CONDITIONING
             COMPRESSOR

TDR          ELECTRIC
             RESISTANCE
             HEAT

TDR          AIR
             CONDITIONING
             COMPRESSOR

TDR          ELECTRIC
             RESISTANCE
             HEAT
```

1/1

0015330

| Category | Citation of document with indication, where appropriate, of relevant passages | Relevant to claim |
|---|---|---|
| | **DOCUMENTS CONSIDERED TO BE RELEVANT** | |
| | IEEE TRANSACTIONS ON INDUSTRY AND GENERAL APPLICATIONS, vol. IGA-7, no. 1, January/February 1971, New York J.L. MURGATROYD: "Demand control of two-position process ensembles of finite magnitude", pages 69-83. <br><br> * Page 69, chapters: "I.Introduction" and "II. Patterns considered and constraints imposed" pages 77-80, chapter:"VI.Development of computer strategy to minimize MD and maximize plant utilization" and figures 7,8 * | 1,5-9 |
| | -- | |
| | DE - B - 1 021 933 (SIEMENS-SCHUCKERTWERKE AG.) <br><br> * Column 1, lines 1-26; column 5, line 43 to column 6, line 16; column 10, lines 3-35; figure 2 * | 1,5,9 |
| | -- | |
| | US - A - 3 970 861 (S.C. McCOLLUM) <br><br> * Column 1, lines 5-23; column 2, line 37 to column 5, line 10; figure * | 1,3,5,6,9 |
| | -- | |
| | US - A - 2 011 396 (B. COGSWELL) <br><br> * Page 1, line 1 to page 2, line 35; figure * | 1,5,6,8,9 |
| | -- | |
| | US - A - 3 489 913 (T. WILDI) <br><br> * Abstract; column 3, line 3 to | 1,2,7,10 |

**CLASSIFICATION OF THE APPLICATION (Int. Cl. 3)**

H 02 J   3/14
G 05 D 23/19

**TECHNICAL FIELDS SEARCHED (Int.Cl. 3)**

H 02 J   3/14
G 05 D 23/19
        23/24

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-10-1979 | POINT |

EPO Form 1503.1  06.78

European Patent
Office

**EUROPEAN SEARCH REPORT**

0015330

Application number

EP 79 30 0294

-2-

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | column 4, line 75; figures 1,2,3,4a * <br><br> -- <br><br> US - A - 4 027 171 (J.B BROWDER et al. ) <br> * Column 1, lines 17-28; column 2, lines 30-58; figures 1,2 * <br><br> -- <br><br> US - A - 3 815 815 (S. SAPIR) <br> * Column 2, line 59 to column 3, line 4; column 3, lines 63-65; figure 1 * <br><br> -- | <br><br><br><br><br>2,10<br><br><br><br><br><br><br>4 | |
| A | DE - C - 670 391 (ALLGEMEINE ELEKTRICITÄTS-GESELLSCHAFT) <br> * Page 2, lines 86-105 * <br><br> -- | 1,9 | |
| A | US - A - 4 010 412 (G.D. FORMAN) <br> * Column 2, lines 22-63 * <br><br> ---- | 2,7,10 | |

TECHNICAL FIELDS SEARCHED (Int. Cl. 3)